# FASCICULE DE BREVET EUROPEEN

(11) **EP 2 872 380 B1**
(45) Date de publication et mention de la délivrance du brevet: **06.07.2016**
(21) Numéro de dépôt: 13728484.0
(22) Date de dépôt: 24.05.2013
(51) Int. Cl.: B62D 65/02, B62D 65/14

(54) **DISPOSITIF D'INDEXAGE D'UN EQUIPEMENT DE VEHICULE AUTOMOBILE ET PROCEDE DE FIXATION D'UN EQUIPEMENT.**
VORRICHTUNG ZUR ANZEIGE EINER VORRICHTUNG EINES KRAFTFAHRZEUGS UND VERFAHREN ZUR BEFESTIGUNG EINER VORRICHTUNG
DEVICE FOR INDEXING AN APPARATUS OF A MOTOR VEHICLE, AND METHOD FOR ATTACHING AN APPARATUS

(30) Priorité: 11.07.2012 FR 1256669
(43) Date de publication de la demande: 20.05.2015
(73) Titulaire: Peugeot Citroën Automobiles SA, 78140 Vélizy Villacoublay (FR)
(72) Inventeur: SAILLARD, David, F-39100 Dole (FR); CONVERS, Germain, F-25200 Bethoncourt (FR)
(86) Numéro de dépôt international: PCT/FR2013/051148
(87) Numéro de publication internationale: WO 2014/009618

(56) Documents cités:
- FR-A1- 2 958 228
- US-B2- 8 091 196

## Description

L'invention a trait au domaine de l'automobile, et plus particulièrement au montage d'équipements sur des éléments de structure du véhicule.

Les véhicules automobiles possèdent des équipements de sécurité, de divertissement ou encore de confort tels qu'un calculateur de trajectoire, un système de son ou de navigation, ou encore une climatisation.

Ces éléments, montés lors de la phase d'assemblage du véhicule, sont ensuite dissimulés par des panneaux de finition (notamment garnitures de pavillon, garnitures de portières, planche de bord). Il est donc important, lors du montage de ces équipements, que les éléments techniques ou technologiques déjà installés ne soient pas détériorés mais également qu'un espace nécessaire à la fixation des éléments de finition soit ménagé.

Il est connu du document FR 2958228 (PEUGEOT CITRÖEN AUTOMOBILES SA) un dispositif de montage d'un boîtier de pédale d'accélérateur sur un support dans un véhicule automobile. Ce support sert d'interface entre la carrosserie du véhicule et le boîtier de pédale et comporte un moyen de pré-positionnement, un moyen de prémaintien et un moyen de fixation.

Ce dispositif donne satisfaction, mais engendre une augmentation du poids du véhicule, due à la présence du support réalisant l'interface entre la caisse et le boîtier de pédale. Un tel surpoids, même minime, n'est plus tolérable à l'heure où les constructeurs cherchent à alléger au maximum les véhicules en les déchargeant d'équipements qui, en fonctionnement du véhicule, n'assurent plus aucune fonction.

Un premier objectif est de proposer un dispositif permettant de faciliter le positionnement correct d'équipements dans le véhicule, sans toutefois représenter une surcharge pour le véhicule.

Un deuxième objectif est de proposer un dispositif permettant de tenir, voire d'augmenter les cadences de production des véhicules automobiles.

Un troisième objectif est de proposer un dispositif réutilisable pour la fabrication de plusieurs véhicules.

A cet effet, il est proposé, en premier lieu, un dispositif d'indexage d'un équipement de véhicule automobile par rapport à un support fixe, qui comprend un guide rapporté comportant :
- un corps conformé en cavalier pour être monté de manière amovible sur le support fixe, le corps comprenant une butée apte à coopérer avec un bord avant du support fixe pour immobiliser le corps par rapport au support suivant une direction longitudinale ;
- une oreille en saillie transversale à partir du corps vers l'extérieur de celui-ci, cette oreille présentant une arête pour l'indexage de l'équipement par rapport au support fixe ;

Le caractère amovible de ce dispositif permet, d'abord, de réduire le poids du véhicule automobile tout en préservant un bon positionnement des équipements du véhicule lors de la phase de montage. Il permet, ensuite, sa réutilisation sur un autre véhicule, au bénéfice de la simplicité de fabrication et des cadences de production.

Diverses caractéristiques supplémentaires peuvent être prévues, seules ou en combinaison :
- l'arête de l'oreille s'étend obliquement par rapport à une face supérieure d'appui du corps ;
- l'oreille s'étend en saillie transversale à partir d'une extrémité avant d'une paroi latérale du corps ;
- la paroi latérale portant l'oreille présente une découpe oblique à la jonction avec l'oreille ;
- l'oreille s'étend sensiblement à l'équerre par rapport à la paroi latérale ;
- le dispositif comprend un élément filaire accroché au corps ;
- le guide comprend une patte solidaire du corps, percée d'un trou pour l'accrochage de l'élément filaire ;
- l'élément filaire se présente sous forme d'un fil, et comporte, à une extrémité, une tête élargie pour son accrochage au guide ;
- l'élément filaire présente, à une extrémité, une tête élargie pour son accrochage au guide ;
- la butée se présente sous forme d'un crochet replié en U.

Il est proposé, en deuxième lieu, un procédé de fixation d'un équipement sur un élément de structure d'un véhicule automobile à l'aide d'un dispositif tel que présenté ci-dessus, ce procédé comprenant les étapes consistant à :
- monter le guide du dispositif d'indexage sur un support fixe ;
- monter l'équipement en appui sur l'arête de l'oreille ;
- fixer l'équipement sur l'élément de structure ;
- retirer le guide par traction sur l'élément filaire.

D'autres objets et avantages de l'invention apparaîtront à la lumière de la description d'un mode de réalisation, faite ci-après en référence aux dessins annexés dans lesquels :
- la figure 1 est une vue en perspective montrant de manière simplifiée un environnement de véhicule dans lequel vient se monter un dispositif d'indexage ;
- la figure 2 est une vue de détail en perspective par-dessous, montrant le dispositif d'indexage en cours de montage ;
- la figure 3 est une vue de détail en perspective par-dessus montrant le dispositif d'indexage en cours de montage ;
- la figure 4 est une vue en perspective par-dessus montrant le dispositif d'indexage monté sur un élément de structure du véhicule ;
- la figure 5 est une vue en perspective par-dessus illustrant le positionnement, dans l'environnement du véhicule, d'un équipement grâce au dispositif d'indexage ;
- la figure 6 est une vue de face montrant les éléments de la figure 5,
- la figure 7 est une vue en perspective illustrant le retrait du dispositif d'indexage.

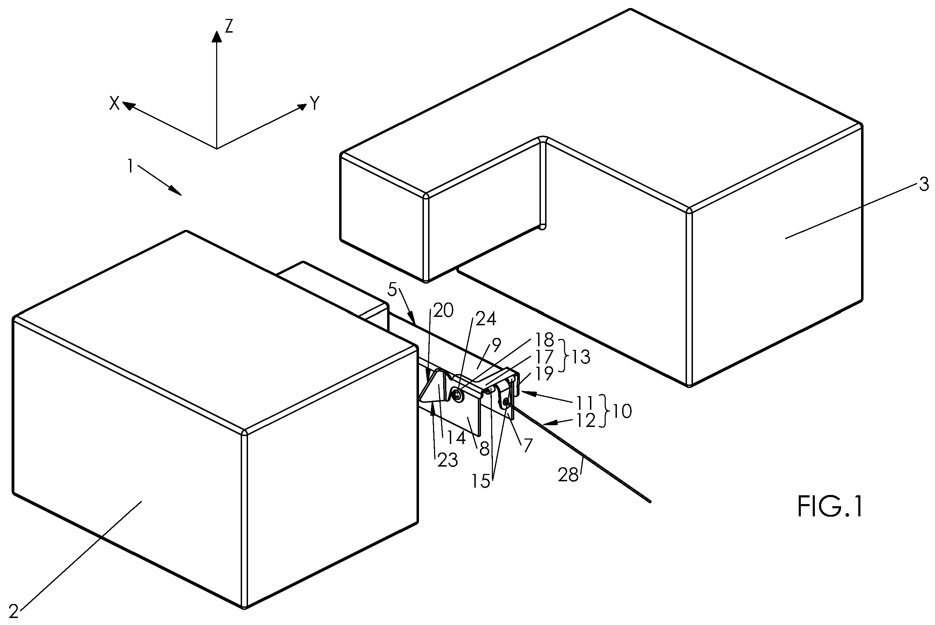

Sur la figure 1 est représenté, de manière simplifiée, un environnement 1 de véhicule comprenant deux éléments 2, 3 de structure prémontés, destinés à être raccordés l'un à l'autre au moyen d'un équipement 4 rapporté. Selon un exemple non limitatif, les éléments 2, 3 de structure sont des blocs fonctionnels d'une planche de bord du véhicule, et l'équipement 4 rapporté est une gaine rigide dans laquelle est logé un conduit d'alimentation en fluide (par exemple frigorigène pour une climatisation).

L'environnement **1** comprend, entre les éléments **2, 3,** un support **5** fixe qui, dans l'exemple précité, peut être une console de fixation d'une pédale d'embrayage ou de frein.

On définit par rapport au véhicule un repère orthogonal XYZ comprenant trois axes perpendiculaires deux à deux, à savoir :
- un axe X, définissant une direction longitudinale, horizontale, confondue avec la direction générale de déplacement du véhicule,
- un axe Y, définissant une direction transversale, horizontale, qui avec l'axe X définit un plan XY horizontal,
- un axe Z, définissant une direction verticale, perpendiculaire au plan XY horizontal.

Le support **5** présente en section un profil en U s'ouvrant vers le bas et comprend une paroi **6** supérieure et deux parois **7, 8** latérales en saillie à partir de la face **9** supérieure.

Le montage de l'équipement **4** rapporté est réalisé au moyen d'un dispositif **10** d'indexage comprenant un guide **11** destiné à être monté sur la pièce **5** support afin d'indexer l'équipement **4** par rapport au support **5** avant que l'équipement **4** ne soit fixé sur au moins l'un des éléments **2, 3** de structure, et un élément **12** filaire accroché au guide **11.**

Le guide **11** comprend un corps **13** et une oreille **14** solidaire du corps **13.** Le corps **13** est conformé en cavalier pour être monté de manière amovible sur le support **5** en étant immobilisé suivant les directions transversale (Y) et verticale (Z), et comprend une butée **15** apte à coopérer avec un bord **16** avant du support **5** pour immobiliser le corps **13** suivant la direction longitudinale (X).

Plus précisément, dans le mode de réalisation illustré, le corps **13** comprend une paroi **17** supérieure, destinée à venir s'appliquer contre la paroi **6** supérieure du support **5** fixe, et deux parois **18, 19** latérales qui s'étendent de part et d'autre de la paroi **17** supérieure, en saillie par rapport à celle-ci.

Dans l'exemple illustré, la butée **15** se présente sous forme d'un crochet replié en U à partir d'un bord transversal arrière de la paroi **17** supérieure, ce crochet venant ainsi s'emboîter sur le bord **16** du support **5.** Plusieurs crochets **15** peuvent être prévus, au nombre de deux dans l'exemple illustré. En variante, la butée peut se présenter sous forme d'une simple patte d'appui verticale, solidaire du corps et venant au contact du bord arrière du support fixe.

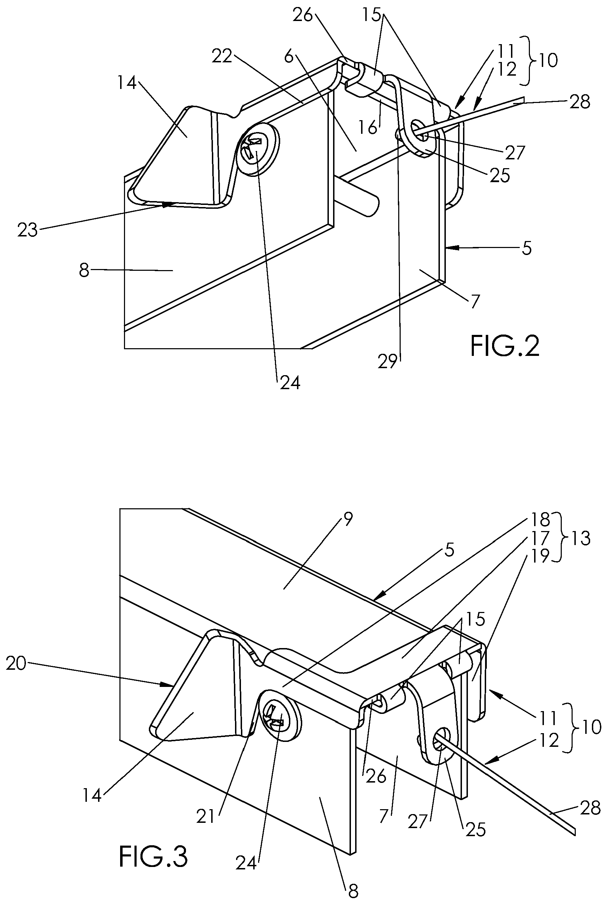

Comme on le voit sur les figures 2 et 3, l'oreille **14** s'étend en saillie transversale à partir du corps **13** vers l'extérieur de celui-ci. Plus précisément, selon un mode de réalisation préféré, l'oreille **14** s'étend en saillie transversale, sensiblement à l'équerre, à partir d'une extrémité avant de l'une des parois **18, 19** latérales du corps **13** (en l'espèce la paroi **18** située à gauche du corps **13,** dans l'exemple représenté sur les figures 2 et 3).

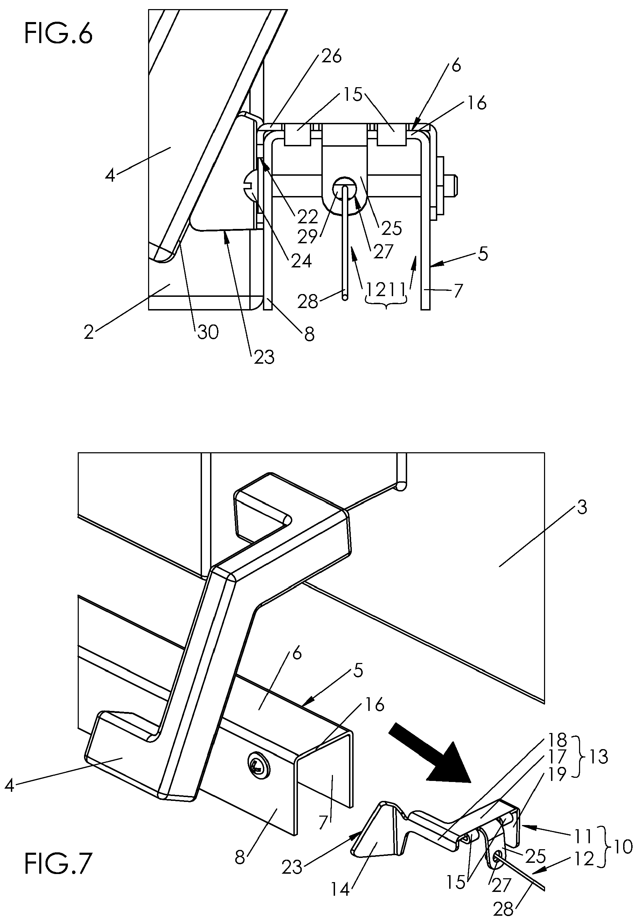

L'oreille **14** présente une arête **20** pour l'indexage de l'équipement **4** par rapport au support **5** fixe. Comme on le voit bien sur les figures 2, 3 et 6, cette arête **20** d'indexage s'étend obliquement par rapport à la paroi **17** supérieure du corps **13.** Ainsi, l'oreille **14** est plus large dans sa partie inférieure que dans sa partie supérieure, ce qui confère à l'oreille **14** une bonne tenue en cisaillement lorsque l'équipement **4** repose sur elle.

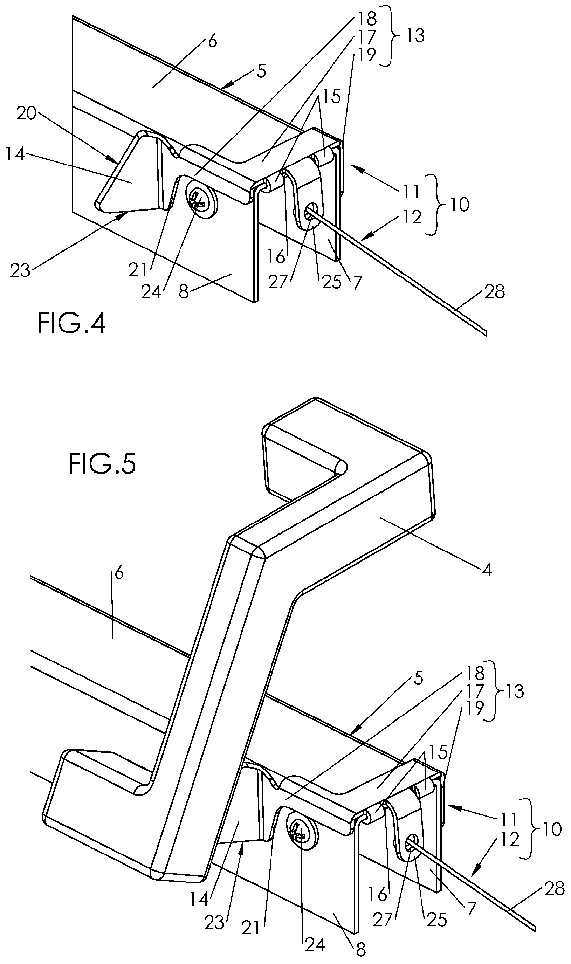

Comme on le voit également sur les figures 2, 3 et 4, la paroi **18** latérale portant l'oreille **14** comporte de préférence, à sa jonction avec l'oreille **14,** une découpe **21** oblique qui joint un bord **22** inférieur de la paroi **18** à une arête **23** inférieure de l'oreille **14.** Cette découpe **21** permet, lors de l'emboîtement du corps **13** sur l'élément **5** fixe, et inversement lors de son retrait, de contourner une éventuelle protubérance **24** telle qu'une tête de vis ou un écrou.

Le guide **11** comprend de préférence une patte **25** pour l'accrochage de l'élément **12** filaire. Cette patte **25** s'étend par exemple en saillie, sensiblement à l'équerre, à partir du bord **26** arrière de la paroi **17** supérieure. Dans l'exemple illustré, la patte **25** s'étend entre les crochets **15.** Cette patte **25** est percée d'un trou **27** pour le passage et l'accrochage de l'élément **12** filaire.

L'élément **12** filaire se présente par exemple sous forme d'un fil **28** ou d'un câble, muni à une extrémité, d'une tête **29** élargie pour son accrochage au guide **11,** et plus précisément à la patte **25** au travers du trou **27** pratiqué dans celle-ci. La retenue de l'élément **12** filaire est assurée par butée de la tête **29** contre le bord du trou **27,** de diamètre inférieur à celui de la tête **29.**

Selon un mode préféré de réalisation, le guide **11** est réalisé en une seule pièce, par exemple par découpe d'une tôle d'acier et pliage pour former les parois **18, 19** latérales, l'oreille **14,** les crochets **15** et la patte **25** d'accrochage. En variante, le guide **11** pourrait être réalisé par assemblage de plusieurs pièces, par exemple par soudure.

Pour monter et fixer l'équipement **4** par rapport aux éléments **2, 3** de structure, on procède comme suit.

On commence par monter le guide **11** sur le support **5** fixe par emboîtement suivant la direction longitudinale (axe X), comme illustré sur les figures 1 à 4.

On monte ensuite l'équipement **4,** dont une face **30** inclinée vient en appui sur l'arête **20** de l'oreille.

L'équipement **4** est alors considéré comme étant correctement positionné (indexé) transversalement et verticalement (c'est-à-dire suivant les directions Y et Z) par rapport aux éléments **2, 3** de structure.

L'équipement étant maintenu dans cette position, on le fixe alors sur l'un au moins des éléments **2, 3** de structure.

On peut alors retirer le guide **11** par simple traction longitudinale sur l'élément **12** filaire. Compte tenu de la souplesse de l'élément **12** filaire, le guide **11** peut contourner d'éventuelles protubérances **24** sur les parois **7, 8** latérales du support **5** fixe, ce qui facilite le retrait du guide **11.**

Le dispositif **10** d'indexage permet de faciliter le positionnement correct d'équipements **4** dans le véhicule. Etant amovible, il ne représente toutefois aucune surcharge pour le véhicule.

Le support **5** fixe pouvant être réalisé sans dispositif **10** d'indexage intégré, les cadences de production peuvent être accrues.

Le dispositif **10** étant amovible, il peut être réutilisé sur la chaîne de fabrication, au bénéfice de la standardisation de la production.

## Revendications

1. Dispositif **(10)** d'indexage d'un équipement **(4)** de véhicule automobile par rapport à un support **(5)** fixe, **caractérisé en ce qu'**il comprend un guide **(11)** rapporté comportant :
- un corps **(13)** conformé en cavalier pour être monté de manière amovible sur le support **(5)** fixe, le corps **(13)** comprenant une butée **(15)** apte à coopérer avec un bord **(16)** avant du support **(5)** fixe pour immobiliser le corps **(13)** par rapport au support **(5)** suivant une direction longitudinale ;
- une oreille **(14)** en saillie transversale à partir du corps **(13)** vers l'extérieur de celui-ci, cette oreille **(14)** présentant une arête **(23)** pour l'indexage de l'équipement **(4)** par rapport au support **(5)** fixe ;

2. Dispositif **(10)** d'indexage selon la revendication 1, **caractérisé en ce que** l'arête **(23)** de l'oreille **(14)** s'étend obliquement par rapport à une paroi **(17)** supérieure d'appui du corps **(13).**

3. Dispositif **(10)** selon la revendication 1 ou la revendication 2, **caractérisé en ce que** l'oreille **(14)** s'étend en saillie transversale à partir d'une extrémité avant d'une paroi **(18)** latérale du corps **(13).**

4. Dispositif **(10)** selon la revendication 3, **caractérisé en ce que** la paroi **(18)** latérale portant l'oreille **(14)** présente une découpe **(21)** oblique à la jonction avec l'oreille **(14).**

5. Dispositif **(10)** selon la revendication 3 ou la revendication 4, **caractérisé en ce que** l'oreille **(14)** s'étend sensiblement à l'équerre par rapport à la paroi **(18)** latérale.

6. Dispositif **(10)** selon l'une des revendications précédentes **caractérisé en ce qu'**il comprend un élément **(12)** filaire accroché au corps **(13).**

7. Dispositif **(10)** selon l'une des revendications précédentes, **caractérisé en ce que** le guide **(11)** comprend une patte **(25)** solidaire du corps **(13),** percée d'un trou **(27)** pour l'accrochage de l'élément **(12)** filaire.

8. Dispositif **(10)** selon l'une des revendications précédentes, **caractérisé en ce que** l'élément **(12)** filaire se présente sous forme d'un fil, et comporte, à une extrémité, une tête **(29)** élargie pour son accrochage au guide **(11).**

9. Dispositif **(10)** selon l'une des revendications précédentes, **caractérisé en ce que** la butée **(15)** se présente sous forme d'un crochet replié en U.

10. Procédé de fixation d'un équipement **(4)** sur un élément **(2, 3)** de structure d'un véhicule automobile à l'aide d'un dispositif **(10)** selon l'une des revendications 6 à 9, **caractérisé en ce qu'**il comprend les étapes consistant à :
- monter le guide **(11)** du dispositif **(10)** d'indexage sur un support **(5)** fixe ;
- monter l'équipement **(4)** en appui sur l'arête **(23)** de l'oreille **(14) ;**
- fixer l'équipement **(4)** sur l'élément **(2, 3)** de structure ;
- retirer le guide **(11)** par traction sur l'élément **(12)** filaire.

## Patentansprüche

1. Indexiervorrichtung (10) für eine Kraftfahrzeugausrüstung (4) im Verhältnis zu einem feststehenden Träger (5), **dadurch gekennzeichnet, dass** sie eine beigebrachte Führung (11) umfasst, die folgendes beinhaltet:
- einen als Reiter ausgeformten Korpus (13), um in abnehmbarer Form auf dem feststehenden Träger (5) montiert zu werden, wobei der Korpus (13) einen Anschlag (15) umfasst, der imstande ist, mit einem vorderen Rand (16) des feststehenden Trägers (5) zusammenzuwirken, um den Korpus (13) im Verhältnis zum Träger (5) in einer Längsrichtung zu blockieren;
- einen quer vom Korpus (13), von diesem aus nach außen vorspringenden Flügel (14), wobei dieser Flügel (14) eine Kante (23) zum Indexieren der Ausrüstung (4) im Verhältnis zum feststehenden Träger (5) aufweist;

2. Indexiervorrichtung (10) nach Anspruch 1, **dadurch gekennzeichnet, dass** sich die Kante (23) des Flügels (14) im Verhältnis zu einer oberen Stützwand (17) des Korpus (13) schräg verlaufend erstreckt.

3. Vorrichtung (10) nach Anspruch 1 oder Anspruch 2, **dadurch gekennzeichnet, dass** sich der Flügel (14) aus einem vorderen Ende einer Seitenwand (18) des Korpus (13) quer vorspringend erstreckt.

4. Vorrichtung (10) nach Anspruch 3, **dadurch gekennzeichnet, dass** die Seitenwand (18), die den Flügel (14) trägt, am Übergang zum Flügel (14) einen schräg verlaufenden Ausschnitt (21) aufweist.

5. Vorrichtung (10) nach Anspruch 3 oder Anspruch 4, **dadurch gekennzeichnet, dass** sich der Flügel (14) in etwa im rechten Winkel zur Seitenwand (18) erstreckt.

6. Vorrichtung (10) nach einem der vorherigen Ansprüche, **dadurch gekennzeichnet, dass** sie ein drahtförmiges Element (12) umfasst, das am Korpus (13) eingehängt ist.

7. Vorrichtung (10) nach einem der vorherigen Ansprüche, **dadurch gekennzeichnet, dass** die Führung (11) eine fest mit dem Korpus (13) verbundene Lasche (25) umfasst, die mit einem Loch (27) zum Einhängen des drahtförmigen Elements (12) versehen ist.

8. Vorrichtung (10) nach einem der vorherigen Ansprüche, **dadurch gekennzeichnet, dass** sich das drahtförmige Element (12) in Form eines Drahtes darstellt, und an einem Ende einen verbreiterten Kopf (29) zum Einhängen in der Führung (11) umfasst.

9. Vorrichtung (10) nach einem der vorherigen Ansprüche, **dadurch gekennzeichnet, dass** sich der Anschlag (15) in Form eines in U-Form gebogenen Hakens darstellt.

10. Verfahren Zum Befestigen einer Ausrüstung (4) auf einem Strukturelement (2, 3) eines Kraftfahrzeugs mithilfe einer Vorrichtung (10) nach einem der Ansprüche 6 bis 9, **dadurch gekennzeichnet, dass** es die folgenden Schritte umfasst:
- Montieren der Führung (11) der Indexiervorrichtung (10) auf einem feststehenden Träger (5);
- Montieren der Ausrüstung (4) an der Kante (23) des Flügels (14) anliegend;
- Befestigen der Ausrüstung (4) auf dem Strukturelement (2, 3);
- Abnehmen der Führung (11) durch Ziehen am drahtförmigen Element (12).

## Claims

1. Positive-location device (10) for the positive location of an item of motor vehicle equipment (4) with respect to a fixed support (5), **characterised in that** it comprises an attached guide (11) comprising:
- a body (13) conformed as clamp so as to be mounted removably on the fixed support (5), the body (13) comprising a stop (15) able to cooperate with a front edge (16) of the fixed support (5) in order to immobilise the body (13) with respect to the support (5) in a longitudinal direction;
- a lug (14) projecting transversely from the body (13) towards the outside thereof, this lug (14) having an edge (23) for the positive location of the equipment (4) with respect to the fixed support (5).

2. Positive-location device (10) according to claim 1, **characterised in that** the edge (23) of the lug (14) extends obliquely with respect to a top support wall (17) of the body (13).

3. Device (10) according to claim 1 or claim 2, **characterised in that** the lug (14) extends projecting transversely from a front end of a lateral wall (18) of the body (13).

4. Device (10) according to claim 3, **characterised in that** the lateral wall (18) carrying the lug (14) has an oblique cutout (21) at the junction with the lug (14).

5. Device (10) according to claim 3 or claim 4, **characterised in that** the lug (14) extends substantially square with respect to the lateral wall (18).

6. Device (10) according to one of the preceding claims, **characterised in that** it comprises a filiform element (12) attached to the body (13).

7. Device (10) according to one of the preceding claims, **characterised in that** the guide (11) comprises a tab (25) secured to the body (13), pierced with a hole (27) for attachment of the filiform element (12).

8. Device (10) according to one of the preceding claims, **characterised in that** the filiform element (12) is in the form of a wire and comprises, at one end, a broadened head (29) for attachment thereof to the guide (11).

9. Device (10) according to one of the preceding claims, **characterised in that** the stop (15) is in the form of a hook bent in a U.

10. Method for fixing an item of equipment (4) to a structure element (2, 3) of a motor vehicle by means of a device (10) according to one of claims 6 to 9, **characterised in that** it comprises the steps consisting of:
- mounting the guide (11) of the positive-location device (10) on a fixed support (5);
- mounting the equipment (4) in abutment on the edge (23) of the lug (14);
- fixing the equipment (4) to the structure element (2, 3);
- removing the guide (11) by pulling on the filiform element (12).
